# EUROPÄISCHE PATENTSCHRIFT

(11) **EP 3 754 219 B1**
(45) Veröffentlichungstag und Bekanntmachung des Hinweises auf die Patenterteilung: **03.08.2022**
(21) Anmeldenummer: 20178291.9
(22) Anmeldetag: 04.06.2020
(51) Int. Cl.: F16D 23/02, G01N 19/04

(54) **VERFAHREN ZUR ERMITTLUNG DER FESTIGKEIT EINER KLEBSTOFFVERBINDUNG ZWISCHEN EINEM SYNCHRONRING UND EINEM REIBBELAG**
METHOD FOR DETERMINING THE STRENGTH OF AN ADHESIVE CONNECTION BETWEEN A SYNCHRONIZING RING AND A FRICTION LINING
PROCÉDÉ DE DÉTERMINATION DE LA RÉSISTANCE D'UNE LIAISON ADHÉSIVE ENTRE UN ANNEAU DE SYNCHRONISATION ET UNE GARNITURE FRICTION

(30) Priorität: 18.06.2019 DE 102019004324
(43) Veröffentlichungstag der Anmeldung: 23.12.2020
(73) Patentinhaber: Diehl Metall Stiftung & Co. KG, 90552 Röthenbach (DE)
(72) Erfinder: Hoppe, Christopher, 91245 Simmelsdorf (DE); Gruner, Matthias, 91207 Lauf an der Pegnitz (DE)
(74) Vertreter: Diehl Patentabteilung

(56) Entgegenhaltungen:
- DE-A1-102013 105 182
- JP-A- H0 225 733

## Beschreibung

Die Erfindung betrifft ein Verfahren zur Ermittlung der Festigkeit einer aus einem ersten Klebstoff hergestellten ersten Klebstoffverbindung zwischen einem Synchronring und einem Reibbelag und/oder der Festigkeit des mit dem Synchronring verklebten Reibbelags nach dem Oberbegriff des Anspruchs 1. Ein solches Verfahren ist aus der DE 10 2013 105182 A1 bekannt. Ferner ist aus der JP H02 25733 A ein Verfahren zur Messung von Adhäsionskräften im Zusammenhang mit Synchronringen bekannt.

Nach dem Stand der Technik ist es allgemein bekannt, dass Synchronringe in Getrieben von Kraftfahrzeugen verbaut werden. Dabei kommen auch Synchronringe zum Einsatz, welche mit einem Reibbelag verklebt sind. Zur Qualitätssicherung ist es erforderlich, die Festigkeit der Klebstoffverbindung zwischen dem Synchronring und dem Reibbelag zu prüfen. Zu diesem Zweck wird nach dem Stand der Technik mittels eines Messers versucht, den Reibbelag vom Synchronring in Umfangsrichtung zu lösen. Sofern mittels des Messers ein Abschnitt des Reibbelags ablösbar ist, welcher einen vorgegebenen Wert überschreitet, wird die Festigkeit der Klebstoffverbindung als nicht ausreichend angesehen. - Die derzeitige Prüfung der Festigkeit zwischen dem Reibbelag und dem Synchronring hängt vom manuellen Geschick der prüfenden Person, insbesondere der Geschwindigkeit der Durchführung des Ablöseversuchs, der Schärfe des Messers u. dgl. ab. Eine exakte und reproduzierbare Prüfung der Festigkeit der Klebstoffverbindung zwischen dem Synchronring und dem Reibbelag ist mit dem derzeitigen Verfahren nicht möglich.

Aufgabe der Erfindung ist es, die Nachteile nach dem Stand der Technik zu beseitigen. Es soll insbesondere ein reproduzierbares und einfach durchzuführendes Verfahren zur Ermittlung der Festigkeit einer Klebstoffverbindung zwischen einem Synchronring und einem Reibbelag und/oder der Festigkeit des mit dem Synchronring verklebten Reibbelags angegeben werden.

Diese Aufgabe wird durch die Merkmale des Patentanspruchs 1 gelöst. Zweckmäßige Ausgestaltungen ergeben sich aus den Merkmalen der abhängigen Patentansprüche.

Nach Maßgabe der Erfindung wird ein Verfahren zur Ermittlung der Festigkeit einer aus einem ersten Klebstoff hergestellten ersten Klebstoffverbindung zwischen einem Synchronring und einem Reibbelag und/oder der Festigkeit des mit dem Synchronring verklebten Reibbelags mit folgenden Schritten vorgeschlagen:
Bereitstellen einer Zug-/Druck-Prüfmaschine mit einer Haltevorrichtung zum Halten des zu prüfenden Synchronrings und einem an einer bewegbaren Traverse der Zug-/Druck-Prüfmaschine angebrachten Verbindungskörper, welcher eine zur freien Fläche des Reibbelags korrespondierend ausgebildete Gegenfläche aufweist,
Aufbringen eines zweiten Klebstoffs auf die Fläche und/oder die Gegenfläche und Herstellen einer zweiten Klebstoffverbindung zwischen dem Verbindungskörper und dem Reibbelag unter vorgegebenen Bedingungen, so dass eine Verbindung zwischen dem Verbindungskörper und dem Synchronring gebildet wird,
Bewegen der Traverse relativ zur Haltevorrichtung, so dass eine zunehmende Kraft auf die Verbindung ausgeübt wird, und
Messen der Kraft, bei welcher die Verbindung zwischen dem Verbindungskörper und dem Synchronring reißt.

Das erfindungsgemäße Verfahren ermöglicht eine reproduzierbare und einfache Prüfung der Festigkeit der ersten Klebstoffverbindung zwischen dem Synchronring und dem Reibbelag und/oder der Festigkeit des mit dem Synchronring verklebten Reibbelags. Das Verfahren kann zumindest teilweise automatisiert durchgeführt werden. Die vom vorgeschlagenen Verfahren gelieferten Prüfergebnisse hängen insbesondere nicht vom manuellen Geschick oder anderen schwer erfassbaren Parametern ab.

Im Sinne der vorliegenden Erfindung wird unter dem Begriff "Zug/Druck-Prüfmaschine" eine sogenannte Universal-Prüfmaschine verstanden, mit welcher Zug- und/oder Druckversuche, insbesondere zur Prüfung der Festigkeit von Werkstoffen, durchgeführt werden können.

Im Sinne der Erfindung kann es sich bei dem "Reibbelag" um einen Kompositwerkstoff handeln, welcher beispielsweise ein Carbonvlies, Carbongewebe, Papier oder dgl. enthält. Bei dem Reibbelag kann es sich insbesondere um einen Carbonreibbelag handeln.

Unter der "Verbindung zwischen dem Verbindungskörper und dem Synchronring" wird eine Anordnung aus der ersten Klebstoffverbindung, dem damit verbundenen Reibbelag sowie der zweiten Klebstoffverbindung verstanden, welche den Reibbelag mit der Gegenfläche verbindet. - Hinsichtlich der Festigkeit eines Klebstoffs wird unterschieden zwischen dessen Adhäsion, welche die Festigkeit der Grenzflächenverbindung zwischen dem Klebstoff und dem damit verklebten Material beschreibt, und der Kohäsion, welche die innere Festigkeit des Klebstoffs beschreibt. Nach dem erfindungsgemäßen Verfahren kann die "Verbindung" also reißen, wenn die Kraft größer ist als einer der folgenden Parameter:
- Adhäsion erster Klebstoff / Synchronring
- Kohäsion erster Klebstoff
- Adhäsion erster Klebstoff / Reibbelag
- innere Festigkeit des Reibbelags
- Adhäsion Reibbelag / zweiter Klebstoff
- Kohäsion zweiter Klebstoff
- Adhäsion zweiter Klebstoff / Verbindungskörper

Abgesehen von der erfindungsgemäß gemessenen Kraft, bei welcher die Verbindung reißt, kann durch eine ergänzende visuelle Prüfung festgestellt werden, weshalb die Verbindung gerissen ist. Es kann insbesondere festgestellt werden, ob eine der Klebstoffverbindungen oder der Reibbelag das schwächste Glied in der Verbindung ist. Das erfindungsgemäße Verfahren kann vorteilhafterweise auch zur Ermittlung der Festigkeit des Reibbelags verwendet werden. In diesem Fall werden als erster und zweiter Klebstoff Klebstoffe verwendet, welche unter den Versuchsbedingungen zweckmäßigerweise eine größere Festigkeit aufweisen als der Reibbelag.

Zur Prüfung der Festigkeit der ersten Klebstoffverbindung wird zweckmäßigerweise eine zweite Klebstoffverbindung gewählt, welche unter Prüfbedingungen eine höhere Festigkeit als die erste Klebstoffverbindung aufweist.

Als erster und/oder zweiter Klebstoff wird vorteilhafterweise ein 2-Komponenten-Klebstoff, vorzugsweise ein Epoxidharz, verwendet. 2-Komponenten-Klebstoffe sind nach dem Stand der Technik allgemein bekannt. Sie weisen insbesondere unter Umgebungsbedingungen (20 bis 30 °C, atmosphärischer Luftdruck) eine hervorragende Festigkeit auf. Es hat sich insbesondere gezeigt, dass eine aus einem 2-Komponenten-Klebstoff hergestellte zweite Klebstoffverbindung zwischen einem, vorzugsweise aus Metall hergestellten, Verbindungskörper und dem Reibbelag eine höhere Festigkeit aufweist, als eine zum Verkleben von Reibbelägen üblicherweise verwendete erste Klebstoffverbindung. Infolgedessen ist es möglich, den Reibbelag mittels des Verbindungskörpers unter Zerstörung der ersten Klebstoffverbindung vom Synchronring zu lösen. Aus der dazu erforderlichen Kraft kann eine Aussage über die Festigkeit der ersten Klebstoffverbindung getroffen werden. Die so getroffene Aussage ist reproduzierbar.

Nach einer weiteren vorteilhaften Ausgestaltung wird die zweite Klebstoffverbindung hergestellt, indem der Verbindungskörper mit einer vorgegebenen Kraft gegen den Reibbelag gedrückt wird. Ferner kann die zweite Klebstoffverbindung zum Aushärten getempert werden. Die Temperatur kann beim Tempern beispielsweise im Bereich von 40 bis 80 °C liegen. Ferner kann vorteilhafterweise die Aushärtezeit der zweiten Klebstoffverbindung vorgegeben werden. Zur Reproduzierbarkeit des Verfahrens ist es zweckmäßig, die Bedingungen zur Herstellung der zweiten Klebstoffverbindung exakt zu definieren.

Nach einer weiteren vorteilhaften Ausgestaltung wird zum Messen der Kraft die Kraft über dem Weg registriert. Der Weg wird dabei vorteilhafterweise in axialer Richtung zwischen der Haltevorrichtung und dem Verbindungskörper mittels einer geeigneten Wegmessvorrichtung gemessen.

Zur weiteren Verbesserung der Reproduzierbarkeit des Verfahrens ist es zweckmäßig, die Traverse mit einer konstanten Geschwindigkeit (x) oder einer konstanten Kraftrate (F) zu bewegen. Die Geschwindigkeit kann 0,5 bis 3,0 mm/Minute, vorzugsweise 0,8 bis 1,5 mm/Minute, betragen. Die konstante Kraftrate kann eine linear zunehmende Kraft im Bereich von 300 bis 600 N/s, vorzugsweise von 400 bis 500 N/s, sein.

Nach einer weiteren Ausgestaltung wird eine Anordnung aus Synchronring, Reibbelag und Verbindungskörper zum Ausüben der zunehmenden Kraft entweder Umgebungsbedingungen oder Betriebsbedingungen ausgesetzt, welche von den Umgebungsbedingungen abweichen. Unter "Betriebsbedingungen" werden Bedingungen verstanden, wie sie insbesondere innerhalb eines Getriebes beim Betrieb herrschen. Beispielsweise kann die Anordnung in einem Ölbad der zunehmenden Kraft ausgesetzt werden. Das Ölbad kann eine Temperatur im Bereich von -40 bis 120 °C aufweisen. Ferner kann es sein, dass die Anordnung in einem Ofen oder einer Kühleinrichtung der zunehmenden Kraft ausgesetzt wird. Dabei kann die Anordnung einer Temperatur im Bereich von -40 bis 150 °C ausgesetzt werden.

Mit dem vorgeschlagenen Verfahren ist es möglich, die Kraft zu messen, bei welcher die erste Klebstoffverbindung oder die zweite Klebstoffverbindung reißt. Zum Prüfen der Festigkeit der ersten Klebstoffverbindung wird zweckmäßigerweise zur Herstellung der zweiten Klebstoffverbindung ein zweiter Klebstoff verwendet, dessen Festigkeit bei den jeweiligen Prüfbedingungen höher ist als die des ersten Klebstoffs.

Alternativ ist es mit dem erfindungsgemäßen Verfahren auch möglich, die Kraft zu messen, bei welcher der Reibbelag in sich reißt. Zu diesem Zweck wird zur Herstellung der ersten und zweiten Klebstoffverbindung ein Klebstoff verwendet, dessen Festigkeit unter Versuchsbedingungen zweckmäßigerweise höher ist als die des Reibbelags.

Nachfolgend wird ein Ausführungsbeispiel der Erfindung anhand der Zeichnung näher erläutert. Es zeigen:
- Fig. 1: eine Querschnittsansicht durch eine erste Versuchsanordnung,
- Fig. 2: schematisch eine vergrößerte Teilschnittansicht der Verbindung des Reibbelags in Fig. 1,
- Fig. 3a-c: schematisch wesentliche Schritte des Verfahrens und
- Fig. 4: eine Querschnittsansicht durch eine zweite Versuchsanordnung.

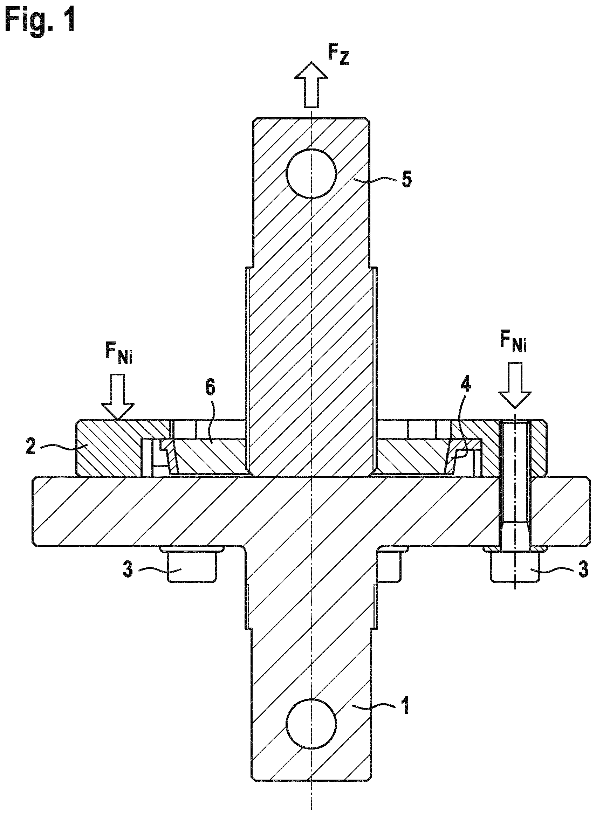

In Fig. 1 ist mit dem Bezugszeichen 1 eine Aufnahme bezeichnet, welche zur Durchführung einer ersten Verfahrensvariante (Zugversuch) an einer unteren feststehenden Traverse einer (hier nicht gezeigten) Universal- bzw. Zug-/Druck-Prüfmaschine, befestigt wird. Mit dem Bezugszeichen 2 ist eine Spannvorrichtung bezeichnet, welche z. B. mittels Schrauben 3 mit der Auflage 1 verbunden ist. In der Spannvorrichtung 2 ist ein zu prüfender Synchronring 4 gehalten.

Mit dem Bezugszeichen 5 ist ein Zapfen bezeichnet, welcher zur Durchführung der ersten Verfahrensvariante an einer bewegten Traverse der (hier nicht gezeigten) Zug-/Druck-Prüfmaschine befestigt wird. Der Zapfen 5 weist an seinem der Auflage 1 zugewandten Ende ein Außengewinde auf, auf welches ein Verbindungskörper 6 aufgeschraubt ist.

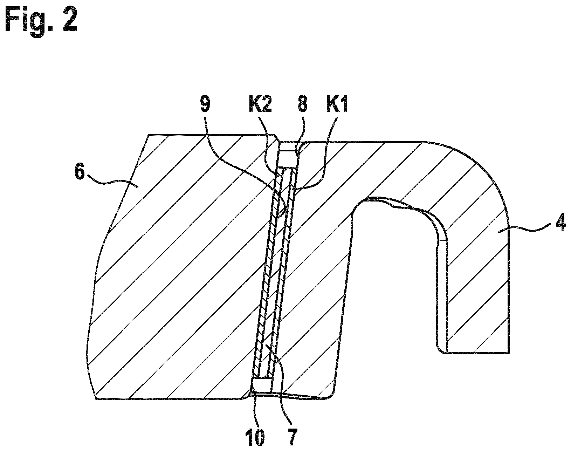

Die Verbindung zwischen dem Verbindungskörper 6 und dem Synchronring 4 ist im Detail in Fig. 2 gezeigt. Mit dem Bezugszeichen 7 ist ein Reibbelag bezeichnet, welcher auf eine konische erste innere Umfangsfläche 8 des Synchronrings 4 mittels einer ersten Klebstoffverbindung K1 aufgeklebt ist. Der Verbindungskörper 6 weist eine zu einer konischen zweiten inneren Umfangsfläche 9 des Reibbelags 7 korrespondierende äußere Umfangsfläche 10 bzw. Gegenfläche auf, welche mittels einer zweiten Klebstoffverbindung K2 mit dem Reibbelag 7 verklebt ist. Die Verbindung umfasst also eine Anordnung aus der ersten Klebstoffverbindung K1, welche zwischen der ersten inneren Umfangsfläche 8 des Synchronrings 4 und dem Reibbelag 7 gebildet ist. Ferner umfasst die Anordnung den Reibbelag 7, welcher an seiner zweiten inneren Umfangsfläche 9 über die zweite Klebstoffverbindung K2 mit der Gegenfläche 10 des Verbindungskörpers 6 verbunden ist.

Zur Durchführung der ersten Verfahrensvariante wird die bewegbare Traverse und damit der Zapfen 5 samt dem Verbindungskörper 6 mit einer konstanten Geschwindigkeit, beispielsweise 1 mm/Minute, in einer Richtung weg von der Aufnahme 1 bewegt. Infolgedessen wirkt auf die erste Klebstoffverbindung K1 zwischen dem Reibbelag 7 und dem Synchronring 4 eine Kraft, insbesondere eine Axialkraft Fz. Der Axialkraft Fz wirkt eine durch die Auflage 1 und die daran befestigte Spannvorrichtung 2 bewirkte Niederhaltekraft F_{Ni} entgegen. Bei Überschreiten der durch die erste Klebstoffverbindung K1 bereitgestellten Kohäsion oder Adhäsion reißt der Reibbelag 7 vom Synchronring 4 ab. Die dabei auftretende maximale Axialkraft F_{Z} wird gemessen. Sie bildet ein Maß für die Festigkeit der ersten Klebstoffverbindung K1.

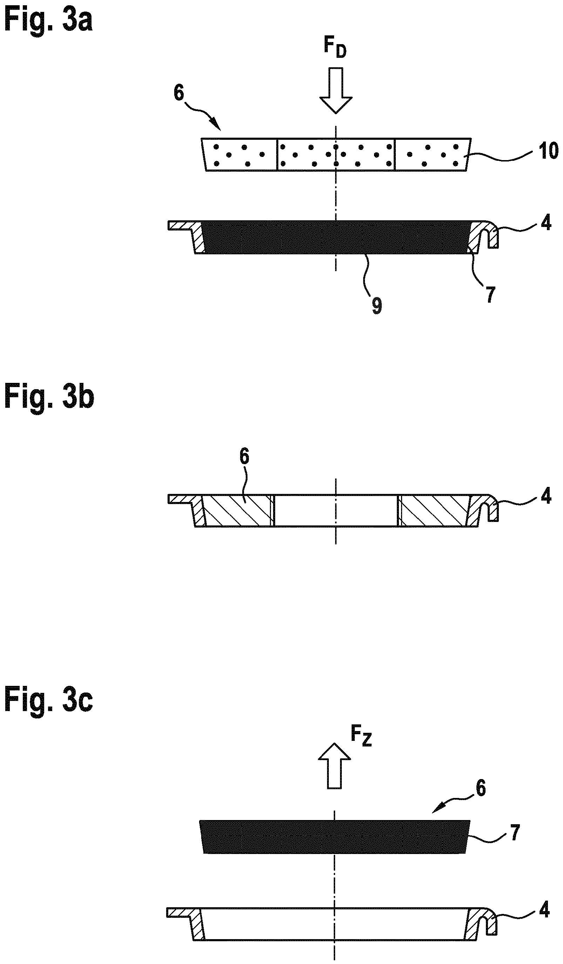

Fig. 3 zeigt nochmals wesentliche Schritte der ersten Verfahrensvariante. In einem ersten Schritt wird auf die Gegenfläche 10 des Verbindungskörpers 6 und/oder die zweite innere Umfangsfläche 9 des Reibbelags 7 ein 2-Komponenten-Klebstoff aufgetragen (Fig. 3a). Anschließend wird der Verbindungskörper 6 mit einer vorgegebenen Kraft F_{D} gegen den Synchronring 4 gedrückt, so dass zwischen der zweiten inneren Umfangsfläche 9 und der Gegenfläche 10 eine zweite Klebstoffverbindung K2 hergestellt wird. Zum Aushärten der zweiten Klebstoffverbindung K2 kann diese bei einer vorgegebenen Temperatur für eine vorgegebene Zeit getempert werden. Beispielsweise kann die zweite Klebstoffverbindung K2 für eine Dauer von 2 bis 8 Stunden bei einer Temperatur von 40 bis 70 °C getempert werden. Daran anschließen kann sich ein weiteres Tempern mit einer Dauer von 2 bis 8 Stunden bei einer Temperatur im Bereich von 40 bis 80 °C (siehe Fig. 3b).

In einem weiteren Verfahrensschritt wird die so vorbereitete Probe in die in Fig. 1 gezeigte Vorrichtung eingespannt. Der Verbindungskörper 6 wird mit einer konstanten Geschwindigkeit vom in der Spannvorrichtung 2 fixierten Synchronring 4 in axialer Richtung wegbewegt. Dabei steigt die Axialkraft Fz, bis der Reibbelag 7 sich unter Zerstörung der ersten Klebstoffverbindung K1 vom Synchronring 4 löst (Fig. 3c). Die dabei auftretende maximale Axialkraft F_{Z} wird gemessen, beispielsweise indem die Kraft über dem Weg in herkömmlicher Weise registriert wird.

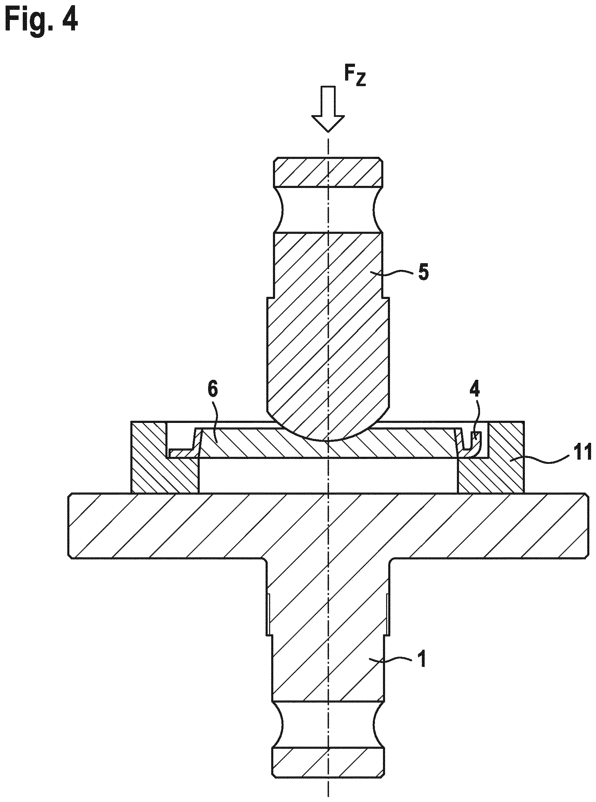

Fig. 4 zeigt eine zweite Versuchsanordnung zur Durchführung einer zweiten Verfahrensvariante, nämlich eines Druckversuchs. Bei der zweiten Versuchsanordnung ist auf der Auflage 1 eine Stützvorrichtung 11 montiert, auf welcher der Synchronring 4 abgestützt ist. Der Verbindungskörper 6 ist - ähnlich wie in Fig. 2 gezeigt - über die zweite Klebstoffverbindung K2 mit dem Reibbelag 7 und der Reibbelag 7 über die erste Klebstoffverbindung K1 mit dem Synchronring 4 verbunden (hier nicht gezeigt).

Die zweite Verfahrensvariante unterscheidet sich von der ersten Verfahrensvariante im Wesentlichen dadurch, dass auf den Verbindungskörper 6 als Axialkraft Fz eine Druckkraft aufgebracht wird. Dabei wird der Zapfen 5 bzw. der Verbindungskörper 6 mit einer konstanten Geschwindigkeit gegen die Auflage 1 bewegt. Es ist aber auch möglich, die Verbindung zwischen dem Synchronring 4 und dem Verbindungskörper 6 mit einer konstanten Kraftrate zu belasten.

Bei der Durchführung des erfindungsgemäßen Verfahrens kann es auch sein, dass anstelle der ersten Klebstoffverbindung K1 die zweite Klebstoffverbindung K2 oder der Reibbelag 7 in sich reißt. In diesem Fall zeigt die gemessene maximale Axialkraft Fz die Festigkeit der zweiten Klebstoffverbindung K2 oder des Reibbelags 7 an. - Es kann visuell geprüft werden, welches das schwächste Glied innerhalb der Verbindung bei den gegebenen Versuchsbedingungen ist.

Das vorgeschlagene Verfahren ermöglicht auf einfache und kostengünstige Weise eine reproduzierbare Ermittlung z. B. der Festigkeit einer ersten Klebstoffverbindung K1 zwischen einem Reibbelag 7 und einem Synchronring 4. Es lässt sich einfach und schnell durchführen. Es eignet sich in hervorragender Weise zur Standardisierung der Ermittlung der Festigkeit von Klebstoffverbindungen.

Die nachfolgende Tabelle zeigt beispielhaft Ergebnisse der Festigkeit der ersten Klebstoffverbindung K1, welche mit dem erfindungsgemäßen Verfahren ermittelt worden sind. Dabei ist die erste Klebstoffverbindung K1 jeweils mit demselben Klebstoff hergestellt worden. Es sind extreme, gezielt erzeugte Störeinflüsse auf die Herstellung der ersten Klebstoffverbindung K1 untersucht worden. Die erreichten Festigkeitswerte ergeben in Bezug auf die Festigkeit ohne Störeinfluss die relative Festigkeit.

| Störeinfluss auf der Fläche | Relative Festigkeit [%] |
|---|---|
| ohne | 100 |
| Störeinfluss 1 | 98 |
| Störeinfluss 2 | 84 |
| Störeinfluss 3 | 92 |
| Störeinfluss 4 | 96 |
| Störeinfluss 5 | 100 |

Bei den Störeinflüssen 1 bis 5 kann es sich beispielsweise um eine Verschmutzung mit fertigungsnahen Betriebsstoffen, insbesondere Öl, Flüssigkeiten oder Staub, handeln.

Der Verbindungskörper 6 kann nach der Durchführung des Verfahrens in geeigneter Weise aufgearbeitet und wiederverwendet werden. Dazu kann die Gegenfläche 10 beispielsweise mittels Sandstrahlen von Resten des Reibbelags 7 und/oder der ersten Klebstoffverbindung K1 gereinigt werden.

### Bezugszeichenliste

- 1: Auflage
- 2: Spannvorrichtung
- 3: Schraube
- 4: Synchronring
- 5: Zapfen
- 6: Verbindungskörper
- 7: Reibbelag
- 8: erste innere Umfangsfläche
- 9: zweite innere Umfangsfläche
- 10: Gegenfläche
- 11: Stützvorrichtung

- F_{D}: Druckkraft
- F_{Ni}: Niederhaltekraft
- F_{Z}: Axialkraft
- K1: erste Klebstoffverbindung
- K2: zweite Klebstoffverbindung

## Patentansprüche

1. Verfahren zur Ermittlung der Festigkeit einer aus einem ersten Klebstoff hergestellten ersten Klebstoffverbindung (K1) zwischen einem Synchronring (4) und einem Reibbelag (7) und/oder der Festigkeit des mit dem Synchronring (4) verklebten Reibbelags (7) mit folgenden Schritten:
Bereitstellen einer Zug-/Druck-Prüfmaschine mit einer Halte- oder Stützvorrichtung (1, 2, 11) zum Halten des Synchronrings (4) und einem an einer bewegbaren Traverse der Zug-/Druck-Prüfmaschine angebrachten Verbindungskörper (6), welcher eine zur freien Fläche (9) des Reibbelags (7) korrespondierend ausgebildete Gegenfläche (10) aufweist,
**gekennzeichnet durch**
Aufbringen eines zweiten Klebstoffs auf die Fläche (9) und/oder die Gegenfläche (10) und Herstellen einer zweiten Klebstoffverbindung (K2) zwischen dem Verbindungskörper (6) und dem Reibbelag (7) unter vorgegebenen Bedingungen, so dass eine Verbindung zwischen dem Verbindungskörper und dem Synchronring gebildet wird,
Bewegen der Traverse relativ zur Halte- oder Stützvorrichtung (1, 2, 11), so dass eine zunehmende Kraft (Fz) auf die Verbindung ausgeübt wird, und
Messen der Kraft (Fz), bei welcher die Verbindung zwischen dem Verbindungskörper (6) und dem Synchronring (4) reißt.

2. Verfahren nach Anspruch 1,
wobei die zweite Klebstoffverbindung (K2) unter Prüfbedingungen eine höhere Festigkeit als die erste Klebstoffverbindung (K1) aufweist.

3. Verfahren nach einem der vorhergehenden Ansprüche,
wobei als erster und/oder zweiter Klebstoff ein 2-Komponenten-Klebstoff, vorzugsweise ein Epoxidharz, verwendet wird.

4. Verfahren nach einem der vorhergehenden Ansprüche,
wobei die zweite Klebstoffverbindung (K2) hergestellt wird, indem der Verbindungskörper (6) mit einer vorgegebenen Kraft gegen den Reibbelag (7) gedrückt wird.

5. Verfahren nach einem der vorhergehenden Ansprüche,
wobei zum Messen der Kraft (Fz) die Kraft (Fz) über dem Weg registriert wird.

6. Verfahren nach einem der vorhergehenden Ansprüche,
wobei die Traverse mit einer konstanten Geschwindigkeit oder einer konstanten Kraftrate bewegt wird.

7. Verfahren nach einem der vorhergehenden Ansprüche,
wobei die konstante Geschwindigkeit 0,5 bis 3,0 mm/Minute, vorzugsweise 0,8 bis 1,5 mm/Minute, oder wobei die konstante Kraftrate 300 bis 600 N/s, vorzugsweise 400 bis 500 N/s, beträgt.

8. Verfahren nach einem der vorhergehenden Ansprüche,
wobei eine Anordnung aus Synchronring (4), erster Klebstoffverbindung (K1), Reibbelag (7), zweiter Klebstoffverbindung (K2) und Verbindungskörper (6) beim Ausüben der zunehmenden Kraft entweder Umgebungsbedingungen oder Betriebsbedingungen, welche von den Umgebungsbedingungen abweichen, ausgesetzt ist.

9. Verfahren nach einem der vorhergehenden Ansprüche,
wobei die Kraft gemessen wird, bei welcher die erste Klebstoffverbindung (K1) oder die zweite Klebstoffverbindung (K2) reißt.

10. Verfahren nach einem der vorhergehenden Ansprüche,
wobei die Kraft gemessen wird, bei welcher der Reibbelag (7) in sich reißt.

## Claims

1. Method for determining the strength of a first adhesive joint (K1), produced from a first adhesive, between a synchronizer ring (4) and a friction lining (7) and/or the strength of the friction lining (7) bonded to the synchronizer ring (4), having the following steps:
providing a tensile/compression testing machine having a holding or supporting device (1, 2, 11) for holding the synchronizer ring (4) and having a connecting body (6), which is attached to a movable crossmember of the tensile/compression testing machine and which has a mating surface (10) of corresponding design to the free surface (9) of the friction lining (7),
**characterized by**
applying a second adhesive to the surface (9) and/or the mating surface (10) and producing a second adhesive joint (K2) between the connecting body (6) and the friction lining (7) under predetermined conditions, with the result that a joint is formed between the connecting body and the synchronizer ring,
moving the crossmember relative to the holding or
supporting device (1, 2, 11), with the result that an increasing force (Fz) is exerted on the joint,
and
measuring the force (Fz) at which the joint between the connecting body (6) and the synchronizer ring (4) breaks.

2. Method according to Claim 1,
wherein the second adhesive joint (K2) has a higher strength than the first adhesive joint (K1) under test conditions.

3. Method according to either of the preceding claims, wherein a 2-component adhesive, preferably an epoxy resin, is used as the first and/or second adhesive.

4. Method according to any one of the preceding claims,
wherein the second adhesive joint (K2) is produced by pressing the connecting body (6) against the friction lining (7) with a predetermined force.

5. Method according to any one of the preceding claims,
wherein, to measure the force (F_{Z}), the force (F_{Z}) is recorded against displacement.

6. Method according to any one of the preceding claims,
wherein the crossmember is moved at a constant speed or a constant force rate.

7. Method according to any one of the preceding claims,
wherein the constant speed is 0.5 to 3.0 mm/minute, preferably 0.8 to 1.5 mm/minute, or wherein the constant force rate is 300 to 600 N/s, preferably 400 to 500 N/s.

8. Method according to any one of the preceding claims,
wherein an assembly comprising the synchronizer ring (4), the first adhesive joint (K1), the friction lining (7), the second adhesive joint (K2) and the connecting body (6) is subjected either to ambient conditions or operating conditions that deviate from the ambient conditions during the exertion of the increasing force.

9. Method according to any one of the preceding claims,
wherein the force at which the first adhesive joint (K1) or the second adhesive joint (K2) breaks is measured.

10. Method according to any one of the preceding claims,
wherein the force at which the friction lining (7) is torn apart is measured.

## Revendications

1. Procédé de détermination de la résistance d'une première liaison adhésive (K1) réalisée à partir d'un premier adhésif entre une bague de synchronisation (4) et une garniture de friction (7) et/ou de la résistance de la garniture de friction (7) collée à la bague de synchronisation (4), ledit procédé comprenant les étapes suivantes :
fournir une machine de test en traction/compression pourvue d'un dispositif de maintien ou de support (1, 2, 11) destiné à maintenir la bague de synchronisation (4) et d'un corps de liaison (6) qui est fixé à une traverse mobile de la machine de test en traction/compression et qui comporte une surface homologue (10) de forme correspondant à celle de la surface libre (9) de la garniture de friction (7),
**caractérisé par** les étapes suivantes
appliquer un deuxième adhésif sur la surface (9) et/ou la surface homologue (10) et réaliser une deuxième liaison adhésive (K2) entre le corps de liaison (6) et la garniture de friction (7) dans des conditions spécifiées de façon à former une liaison entre le corps de liaison et la bague de synchronisation,
déplacer la traverse par rapport au dispositif de maintien ou de support (1, 2, 11) de façon à exercer une force croissante (F_{Z}) sur la liaison, et
mesurer la force (F_{Z}) à laquelle la liaison entre le corps de liaison (6) et la bague de synchronisation (4) se rompt.

2. Procédé selon la revendication 1,
la deuxième liaison adhésive (K2) ayant une résistance supérieure à celle de la première liaison adhésive (K1) dans des conditions de test.

3. Procédé selon l'une des revendications précédentes,
un adhésif à 2 composants, de préférence une résine époxy, étant utilisé comme premier et/ou deuxième adhésif.

4. Procédé selon l'une des revendications précédentes,
la deuxième liaison adhésive (K2) étant réalisée en ce que le corps de liaison (6) est pressé contre la garniture de friction (7) avec une force spécifiée.

5. Procédé selon l'une des revendications précédentes,
pour mesurer la force (F_{Z}), la force (F_{Z}) étant définie en fonction du déplacement.

6. Procédé selon l'une des revendications précédentes,
la traverse étant déplacée à une vitesse constante ou à un taux de force constant.

7. Procédé selon l'une des revendications précédentes,
la vitesse constante étant de 0,5 à 3,0 mm/minute, de préférence de 0,8 à 1,5 mm/minute, ou le taux de force constant étant de 300 à 600 N/s, de préférence de 400 à 500 N/s.

8. Procédé selon l'une des revendications précédentes,
un ensemble qui comprend une bague de synchronisation (4), une première liaison adhésive (K1), une garniture de friction (7), une deuxième liaison adhésive (K2) et un corps de liaison (6) étant exposé soit à des conditions ambiantes, soit à des conditions de fonctionnement, qui s'écartent des conditions ambiantes, lorsque la force croissante est exercée.

9. Procédé selon l'une des revendications précédentes,
la force à laquelle la première liaison adhésive (K1) ou la deuxième liaison adhésive (K2) se rompt étant mesurée.

10. Procédé selon l'une des revendications précédentes,
la force à laquelle la garniture de friction (7) se rompt étant mesurée.
